# EUROPÄISCHE PATENTSCHRIFT

(11) **EP 1 529 448 B1**
(45) Veröffentlichungstag und Bekanntmachung des Hinweises auf die Patenterteilung: **17.05.2006**
(21) Anmeldenummer: 04025378.3
(22) Anmeldetag: 26.10.2004
(51) Int. Cl.: A23L 3/00, A23L 3/04

(54) **Verfahren zum Betreiben einer Pasteurisierungsanlage**
Method for operating a pasteurization plant
Méthode pour le fonctionnement d'une installation de pasteurisation

(30) Priorität: 06.11.2003 DE 10351689
(43) Veröffentlichungstag der Anmeldung: 11.05.2005
(73) Patentinhaber: KHS AG, 44143 Dortmund (DE)
(72) Erfinder: Münzer, Jan, 44137 Dortmund (DE); Stolte, Thomas, 55545 Bad Kreuznach (DE); Till, Volker, 65719 Hofheim/Taunus (DE)

(56) Entgegenhaltungen:
- DE-A- 3 210 341
- DE-A- 19 908 035
- US-A1- 2002 073 652
- US-A1- 2002 170 440

## Beschreibung

Die Erfindung bezieht sich auf ein Verfahren zum Betreiben einer Pasteurisierungsanlage zum Pasteurisieren von Produkten in Behältern gemäß Oberbegriff des Anspruchs 1 sowie auf eine zur Durchführung des Verfahrens geeignete Vorrichtung.

In der Getränkeindustrie ist es insbesondere bei leicht verderblichen Gütern üblich, diese zu pasteurisieren. Bei bekannten Pasteurisierungsanlagen werden dabei die Behälter mit den Produkten in praktisch gleichmäßiger Bewegung vom Eingangsbereich zum Ausgangsbereich gefördert. Während dieser Bewegung werden sie aufgeheizt, bis sie die gewünschten Pasteurisierungseinheiten aufgenommen haben, danach gekühlt, womit der Pasteurisierungsvorgang beendet ist. Ein dazu vorgesehener Pasteurisierungstunnel hat demzufolge einen Aufheizabschnitt, einen Überhitzungs- und Pasteurisierungsabschnitt mit einem nachfolgenden Abkühlabschnitt. Die einzelnen Abschnitte können weitere Unterzonen aufweisen. Die dadurch sichergestellte allmähliche Aufheizung und Abkühlung wird insbesondere bei in der Getränkeindustrie verwendeten Glasflaschen vorgezogen, um durch abrupte Temperaturänderungen ein Zerstören der Glasflaschen zu vermeiden. Die Wärmeübertragung auf das in den Behältern enthaltene Produkt geschieht normalerweise durch Besprühen dieser Behälter mit Wasser, die auf einem Förderband, welches die Sprühflüssigkeit nach unten durchtreten läßt, fortbewegt werden. Unter dem Förderband sind Auffangbehälter für die Sprühflüssigkeit angebracht, aus denen die Pumpen für die Besprühung gespeist werden. Zwischen den aufzuheizenden und abzukühlenden Abschnitten kann mit der Sprühflüssigkeit zonenweise Wärme ausgetauscht werden.

Um eine optimale Abstufung der Temperaturen in den einzelnen Abschnitten erreichen zu können, sind diese entsprechend unterteilt. Meist weist der Abschnitt "Aufheizen" drei bis vier einzelne Zonen auf, das Pasteurisierungsgebiet zwei oder drei Zonen, wobei noch eine Überhitzungszone vor der Pasteurisierungszone vorgesehen sein kann. Der anschließende Abschnitt "Abkühlen" weist wiederum drei bis vier Einzelzonen auf, in welchen die Behälter durch eine schrittweise abnehmende Temperatur der Sprühflüssigkeit bis zur gewünschten Ausgangstemperatur abgekühlt werden.

Die jeweils eingestellten Sprühtemperaturen sind genau dem Produkt, den Längen der Zonen und der Geschwindigkeit des Transporteurs angepaßt, damit sichergestellt ist, daß das in den Behältern befindliche Produkt den vorgeschriebenen Pasteurisierungsgrad erreicht.

Daraus ergibt sich, dass im Produktionsbetrieb dem Tunnelpasteur mindestens die Wärmemenge zugeführt werden muß, die erforderlich ist, um das Getränk und die Behälter von der Eintrittstemperatur bis auf die Austrittstemperatur mit zwischenzeitlicher Pasteurisationstemperatur zu erwärmen und auch wieder zu kühlen.

Der Erfindung liegt nun die Aufgabe zugrunde, eine Pasteurisieranlage vorzuschlagen, bei welcher durch Reduzierung der Austrittstemperatur der Behälter aus dem Pasteurgehäuse die zugeführte erforderliche Wärmemenge bzw. bei gleicher üblicher Austrittstemperatur die erforderliche Behandlungszeit und damit die notwendige Tunnelpasteurgröße entsprechend vermindert wird.

Dazu wird erfindungsgemäß vorgeschlagen, dass die Abfülltemperatur des Getränks vor dem Abfüllen in Behälter durch die Wärmemenge der Pasteurisierungsanlage erhöht und die befüllten Behälter mit dieser erhöhten Produkttemperatur der Pasteurisierungsanlage zugeführt werden, wobei die rückgeführte gekühlte Prozessflüssigkeit mindestens in einer Zone der Pasteurisierungsanlage eingesetzt wird.

Ferner wird in eigenständiger Ausbildung der Erfindung vorgeschlagen, dass die Vorwärmung des Getränks mit einem Prozessmedium des Pasteurs erfolgt, dessen Temperatur nur geringfügig oberhalb der Abfülltemperatur liegt.

Demzufolge wird mit diesen Verfahrensabläufen in Kombination eines an sich bekannten rekuperativen Wärmeaustausches mit der vorgeschlagenen Getränkevorwärmung vor dem Füllvorgang eine Kühlung der Getränkebehälter im letzten Abschnitt des Tunnelpasteurs auf eine niedrigere Austrittstemperatur erzielt. Dies führt zu einer erheblichen Reduzierung der Gesamtwärmemenge für den Tunnelpasteur. Dabei ist zu berücksichtigen, dass die Wärmemenge, die in den aus dem Tunnelpasteur austretenden Getränkebehältern vorhanden ist, nur dann in die Aufheizung des Getränks im Sinne der Wärmerekuperation zurückfließen kann, wenn ein Sprühmedium zur Beaufschlagung der Behälter mit einem ausreichenden Temperaturgefälle in Richtung der Austrittstemperatur zur Verfügung steht. Dabei ist erfindungsgemäß durch den Einsatz eines Wärmeaustauschers in den kalten Getränkestrom vor der Füllmaschine ein wesentlich effektiverer Wärmeübergang sichergestellt. Die Kühltemperatur für die Austrittsseite des Tunnelpasteurs liegt dabei nur um einige Grad höher als die Lager- und/oder Abfülltemperatur des Getränks.

Im Nachfolgenden wird die Erfindung anhand eines Ausführungsbeispiels näher erläutert, wobei auf eine bekannte Pasteurisierungsanlage, wie sie beispielsweise aus der DE 199 08 035 A1 bekannt ist, Bezug genommen wird.

In der Zeichnung zeigt:
- Figur 1: einen Querschnitt durch eine Pasteurisierungsanlage und
- Figur 2: ein Verfahrensschema mit zeichnerischer Eingliederung des erfindungsgemäßen Verfahrens in der Pasteurisierungsanlage nach Figur 1.

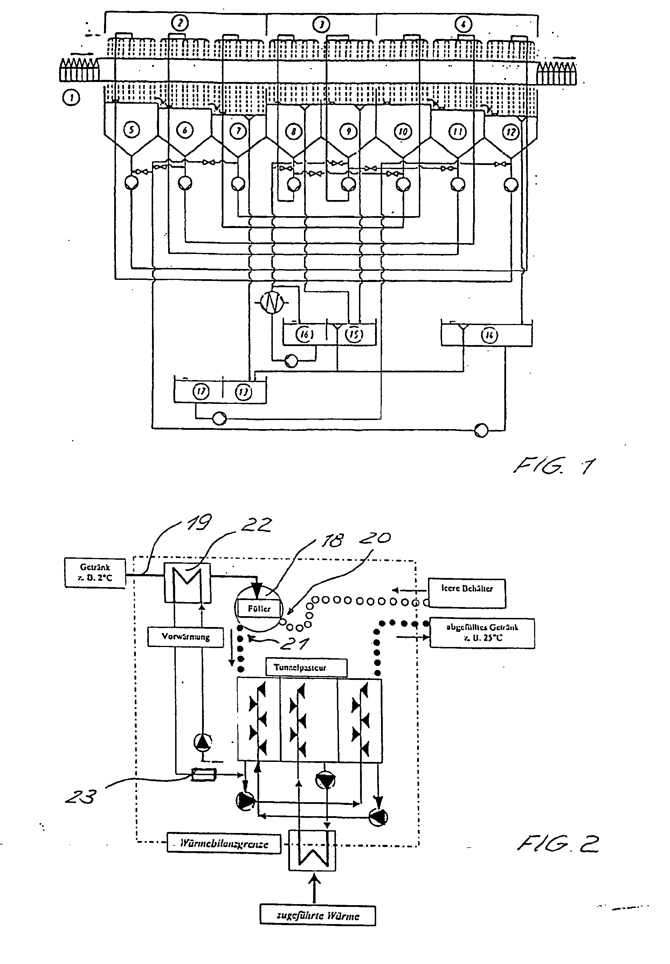

Wie aus der Zeichnung gemäß Figur 1 ersichtlich, besteht die Pasteurisierungsanlage aus einem in Durchlaufrichtung der jeweiligen Behälter 1 im Anfangsbereich angeordneten Aufwärmabschnitt 2, der wiederum aus einer Vielzahl von Einzelzonen 5-7 bestehen kann, wodurch die Aufwärmphase entsprechend schonend vorgenommen wird. Diesem Aufwärmabschnitt 2 schließt sich eine Überhitzungszone 8 an, dieser folgt die eigentliche Pasteurisierzone 9. Anschließend beginnt der Bereich des Abkühlabschnitts 4, der, wie auch bei den anderen Abschnitten, aus einer größeren Anzahl von Einzelzonen 10-12 bestehen kann.

Das Betriebsprogramm einer solchen Pasteurisierungsanlage wird zunächst für den Pasteurisierungsbetrieb unter optimalen Bedingungen ausgelegt. So ist beispielsweise vorgesehen, daß die erste Aufwärmzone 5 eine Besprühungstemperatur von 18°C aufweist. Entsprechend ist die Ausgangstemperatur der pasteurisierten Produkte mit einer Besprühungstemperatur von etwa 17°C vorgesehen. Die zweite Aufwärmzone 6 weist eine Besprühungstemperatur von geringfügig oberhalb 24°C auf, wobei die damit kommunizierende Abkühlzone wiederum etwas geringer bei 23°C liegen kann. Am Beispiel dieser beiden Zonen ist erkennbar, daß das Wasser aus den Zonen "Abkühlen" 4 jeweils der Zone im Abschnitt "Aufwärmen" 2 zugeleitet wird, deren gewollte Aufheiztemperatur der gewollten Abkühltemperatur am nächsten kommt. Zur Ausgleichung der jeweiligen Temperaturdifferenz wird dem Wasser aus dem Abkühlabschnitt 4 vorzugsweise Wasser aus dem ersten Tank 13 in geringfügigen Mengen zugegeben, dessen Wasser höherer Temperatur aus der letzten Station 7 des Aufwärmabschnitts 2 stammt. Im Anschluß an diesen Aufwärmabschnitt befindet sich die Überhitzungszone 8, deren Temperatur wiederum höher als die der Temperatur der letzten Aufwärmzone 7 ist und aus einem zweiten Behälter 15 mit gegenüber dem ersten Behälter 13 höhere Temperatur gespeist wird. Dem zweiten Behälter 15 ist ein dritter Behälter 16 zugeordnet, dem das Überschußwasser des Behälters 15 zugeleitet wird. Dieser dritte Behälter 16 wird zudem mittels einer Aufheizeinrichtung auf einer vorbestimmbaren höheren Temperatur gehalten. Aus diesem Behälter 16 wird auch die Überhitzungs- und Pasteurisierungszone 8, 9 beaufschlagt, wobei die ablaufende heiße Wassermenge in dem zweiten Behälter 15 gesammelt und mit dem Heißwasser des dritten Behälters 16 vermischt wird.

Bei einer auftretenden Störung, beispielsweise hervorgerufen durch einen Behälterrückstau in der Pasteurisierungsanlage, wird durch eine nicht weiter dargestellte Steuereinrichtung eine sofortige Ansteuerung bestimmter Ventile vorgenommen, so daß beispielsweise das Wasser geringerer Temperatur aus dem ersten Behälter 13 der Überhitzungs- und/oder Pasteurisierungszone 8, 9 zugeführt wird. Den anderen Abschnitten 2, 4 kann ebenfalls Wasser geringerer Temperatur, beispielsweise aus einem weiteren vierten Behälter 14 zugegeben werden.

Gemäß dem in Figur 2 dargestellten Ausführungsbeispiel ist der Pasteurisierungsanlage eine Füllmaschine 18 vorgeschaltet, der das kalte Getränk mittels einer Leitung 19 zugeführt wird. Dieser Füllmaschine 18 werden die leeren Getränkebehälter auf der Einlaufseite 20 zugeführt und nach der Befüllung auf der Auslaufseite 21 in Richtung der Pasteurisierungsanlage abgeleitet. Wie aus der Zeichnung ersichtlich, wird die wärmere Pasteurflüssigkeit aus einem geeigneten Pasteurbereich 5-7, 10-12 oder an anderer Stelle entnommen und einem Wärmeaustauscher 22 zugeleitet, der seinerseits von dem kalten Getränk mit beispielsweise 2°C durchflossen wird. Hierbei tritt eine entsprechende Temperaturerhöhung in dem Getränk ein, so dass die Flaschen nach der Befüllung mit einer entsprechend höheren Temperatur in die Pasteurisieranlage eingeleitet werden können. Die wärmere Pasteurflüssigkeit wird in dem Wärmeaustauscher 22 entsprechend rückgekühlt, wobei sich in dem Getränk eine Temperatur einstellt, die geringfügig höher liegt als dessen Lagertemperatur. Die kühlere Pasteurflüssigkeit gelangt von dem Wärmeaustauscher 22 vorzugsweise zur Austrittsseite des Pasteurs in den Abkühlabschnitt 4 bzw. den Einzelzonen 10-12 und sorgt demzufolge für eine effektivere Kühlung am Austritt des Pasteurs. Dazu kann eine direkte Zuleitung zu dem Abkühlabschnitt 4 oder auch ein entsprechender Zwischenbehälter 23 vorgesehen sein. Es ist aber denkbar, dieses aus dem Sekundärbereich des Wärmeaustauschers zurückfließende kältere Sprühwasser an beliebig anderer Stelle des Pasteurs einzusetzen bzw. beliebig zu vermischen. Ist eine solche weitere Kühlung nicht erforderlich, kann bei der sonst üblichen Austrittstemperatur die erforderliche Behandlungszeit und damit die notwendige Tunnelpasteurgröße entsprechend reduziert werden.

## Patentansprüche

1. Verfahren zum Betreiben einer Pasteurisierungsanlage zum Pasteurisieren von Getränken in Behältern, die von einer Füllmaschine (18) herangeführt und in einem Behälterstrom durch aufeinanderfolgende Abschnitte zum Aufwärmen (2), Pasteurisieren (8,9) und Abkühle (4) unter Einsatz von übersprühender Flüssigkeit durch die Behandlungsanlage transportiert werden, ***dadurch gekennzeichnet, dass*** die Abfülltemperatur des Getränks vor dem Abfüllen in Behälter durch die Wärmemenge der Pasteurisierungsanlage erhöht und die befüllten Behälter mit dieser erhöhten Produkttemperatur der Pasteurisierungsanlage zugeführt werden, wobei die rückgeführte gekühlte Prozessflüssigkeit mindestens in einer Zone der Pasteurisierungsanlage eingesetzt wird.

2. Verfahren nach Anspruch 1, ***dadurch gekennzeichnet, dass*** die Vorwärmung des Getränks mit einem Prozessmedium des Pasteurs erfolgt, dessen Temperatur nur geringfügig oberhalb der Abfülltemperatur liegt.

3. Verfahren nach den vorhergehenden Ansprüchen, ***dadurch gekennzeichnet, dass*** zur Vorwärmung des Getränks die Wärmeenergie der aus der Pasteurisierungsanlage austretenden Behälter im Abkühlungsabschnitt (4) verwertet wird.

4. Verfahren nach den vorhergehenden Ansprüchen, ***dadurch gekennzeichnet, dass*** das nach dem Wärmeübergang zurückgeführte kühlere Prozessmedium der letzten Abkühlzone (12) der Pasteurisieranlage zugeteilt wird.

5. Verfahren nach den vorhergehenden Ansprüchen, ***dadurch gekennzeichnet, dass*** die Wärmeübertragung in den kälteren Getränkestrom mittels Wärmeaustauscher (22) im Zulaufbereich zur Füllmaschine erfolgt.

6. Vorrichtung zur Durchführung des Verfahrens nach den vorhergehenden Ansprüchen mit einer Abfüll- und Pasteurisieranlage, ***dadurch gekennzeichnet, dass*** in der Getränke-Leitung 19 ein Wärmeaustauscher (22) zwischengeschaltet ist und dieser sekundärseitig mit dem gegenüber der Getränketemperatur wärmeren Prozessflüssigkeit der Pasteurisierungsanlage beaufschlagbar ist.

7. Vorrichtung nach Anspruch 6, ***dadurch gekennzeichnet, dass*** die sekundärseitig rückfließende und kühlere Prozessflüssigkeit einem separaten Behälter (23) und/oder einer Zone des Abkühlbereichs (4) oder einer anderweitigen Zone der Pasteurisierungsanlage zuleitbar ist.

## Claims

1. Method for operating a pasteurizing plant for pasteurizing beverages in containers, which are advanced by a filling machine (18) and are conducted in a container stream through the treatment plant through successive sections for heating (2), pasteurizing (8, 9) and cooling (4) using sprayed liquid, **characterised in that** the bottling temperature of the beverage before being bottled into containers is increased by the heat of the pasteurizing plant and the filled containers are supplied to the pasteurizing plant at this increased product temperature, wherein the recycled cooled process liquid is used at least in one zone of the pasteurizing plant.

2. Method according to claim 1, **characterised in that** the beverage is preheated with a process medium of the pasteurizer, the temperature of which is only slightly higher than the bottling temperature.

3. Method according to one of the preceding claims, **characterised in that** the thermal energy of the containers exiting the pasteurizing plant in the cooling section (4) is utilized to preheat the beverage.

4. Method according to one of the preceding claims, **characterised in that** the cooler process medium recycled after the heat transfer is distributed to the final cooling zone (12) of the pasteurizing plant.

5. Method according to one of the preceding claims, **characterised in that** the heat transfer into the colder beverage stream is effected through the intermediary heat exchangers (22) in the entry region to the filling machine.

6. Apparatus for the accomplishment of the method according to the preceding claims having a bottling and pasteurizing plant, **characterised in that** a heat exchanger (22) is interposed in the beverage line (19) and can be impinged upon on the secondary side with the process liquid from the pasteurizing plant which is warmer than the beverage temperature.

7. Apparatus according to claim 6, **characterised in that** the cooler process fluid that flows back on the secondary side can be conducted to a separate container (23), and/or to a zone of the cooling region (4) or to another zone of the pasteurizing plant.

## Revendications

1. Procédé de fonctionnement d'une installation de pasteurisation destinée à pasteuriser des boissons dans des récipients, qui sont acheminés à partir d'une machine de remplissage (18) et sont transportés à travers l'installation en un flux de récipients à travers des postes successifs pour le chauffage (2), la pasteurisation (8, 9) et le refroidissement (4) au moyen d'un liquide apte à être pulvérisé, **caractérisé en ce que** la température de soutirage de la boisson est augmentée avant le soutirage dans le récipient par la quantité de chaleur de l'installation de pasteurisation et les récipients remplis sont acheminés avec cette température élevée des produits vers l'installation de pasteurisation, le liquide de traitement refroidi remis en circulation étant utilisé au moins dans une zone de l'installation de pasteurisation.

2. Procédé selon la revendication 1, **caractérisé en ce que** le préchauffage de la boisson est effectué au moyen d'un fluide de traitement du pasteurisateur, dont la température est seulement légèrement supérieure à la température de soutirage.

3. Procédé selon l'une quelconque des revendications précédentes, **caractérisé en ce que**, pour le préchauffage de la boisson, l'énergie thermique des récipients sortant de l'installation de pasteurisation est transformée dans le poste de refroidissement (4).

4. Procédé selon l'une quelconque des revendications précédentes, **caractérisé en ce que** le fluide de traitement plus froid, remis en circulation après la transmission de chaleur, est attribué à la zone de refroidissement (12) de l'installation de pasteurisation.

5. Procédé selon l'une quelconque des revendications précédentes, **caractérisé en ce que** la transmission de chaleur dans le flux des boissons plus froides est effectuée au moyen d'un échangeur thermique (22) dans la zone d'admission vers la machine de remplissage.

6. Dispositif destiné à la mise en oeuvre du procédé selon l'une quelconque des revendications précédentes, comportant une installation de soutirage et de pasteurisation, **caractérisé en ce qu'**un échangeur thermique (22) est intercalé dans la conduite de circulation de la boisson (19) et ledit échangeur thermique peut être sollicité du côté secondaire par le liquide de traitement de l'installation de pasteurisation, lequel est plus chaud que la température de la boisson.

7. Dispositif selon la revendication 6, **caractérisé en ce que** le liquide de traitement, remis en circulation du côté secondaire et plus froid, peut être acheminé vers un réservoir (23) séparé et/ou une zone du poste de refroidissement (4) ou une autre zone quelconque de l'installation de pasteurisation.
